# FASCICULE DE BREVET EUROPEEN

(11) **EP 3 119 543 B1**
(45) Date de publication et mention de la délivrance du brevet: **15.08.2018**
(21) Numéro de dépôt: 15713998.1
(22) Date de dépôt: 09.03.2015
(51) Int. Cl.: B22C 7/02, B22C 9/04, B22C 9/22, B29C 65/00

(54) **ARBRE DE COULÉE ET PROCÉDÉ D'ASSEMBLAGE**
GUSSBAUM UND VERFAHREN ZUR MONTAGE
CASTING TREE AND METHOD OF ASSEMBLY

(30) Priorité: 19.03.2014 FR 1452292
(43) Date de publication de la demande: 25.01.2017
(73) Titulaire: SAFRAN AIRCRAFT ENGINES, 75015 Paris (FR)
(72) Inventeur: MARQUES, François, F-77550 Moissy-Cramayel Cedex (FR); GRISET, Olivier, F-77550 Moissy-Cramayel Cedex (FR)
(74) Mandataire: Calvo de Nó, Rodrigo
(86) Numéro de dépôt international: PCT/FR2015/050578
(87) Numéro de publication internationale: WO 2015/140448

(56) Documents cités:
- DE-A1- 19 749 592
- US-A- 3 848 654
- US-A1- 2002 174 968

## Description

### Arrière-plan de l'invention

La présente invention concerne le domaine de la fonderie, et plus particulièrement un arbre de coulée pour fonderie à modèle perdu, ainsi que des procédés de fabrication de moules carapaces et de fonderie utilisant un tel modèle.

Dans la description qui suit, les termes « haut », « bas », « horizontal » et « vertical » sont définis par l'orientation normale d'un tel moule lors de la coulée de métal dans son intérieur.

Des procédés de fonderie dits à cire perdue ou à modèle perdu sont connus depuis l'antiquité. Ils sont particulièrement adaptés pour la production de pièces métalliques avec des formes complexes. Ainsi, la fonderie à modèle perdu est notamment utilisée pour la production de pales de turbomachines.

Dans la fonderie à modèle perdu, la première étape est normalement la réalisation d'un modèle en matériau à température de fusion comparativement peu élevée, comme par exemple une cire ou résine. Ce modèle est ensuite intégré dans un arbre de coulée qui sera enrobé de matériau réfractaire pour former un moule. Parmi les différents types de moules pouvant être utilisés dans la fonderie à modèle perdu, on connaît notamment les moules dits moules carapace, formés par trempage du modèle ou de la grappe de modèles dans une barbotine, suivi d'un saupoudrage du modèle ou de la grappe enduits de barbotine avec du sable réfractaire pour former une carapace autour du modèle ou de la grappe, et de la cuisson de cette carapace pour la fritter de manière à consolider l'ensemble. Plusieurs trempages et saupoudrages successifs peuvent être envisagés afin d'obtenir une carapace d'une épaisseur suffisante avant sa cuisson. On entend par « sable réfractaire », dans le présent contexte, tout matériau granulaire avec une granulométrie suffisamment fine pour satisfaire aux tolérances de production souhaitées, capable de résister, à l'état solide, aux températures du métal en fusion, et pouvant être consolidé d'un seul tenant lors de la cuisson de la carapace.

Après évacuation ou élimination du matériau du modèle de l'intérieur du moule, ce qui donne son nom à ces procédés dits à modèle perdu, un métal en fusion est coulé dans ce moule, afin de remplir la cavité de moulage formée par le modèle dans le moule après son évacuation ou élimination. Une fois que le métal se refroidit et solidifie, le moule peut être ouvert ou détruit afin de récupérer une pièce métallique conforme à la forme du modèle. On entend par « métal », dans le présent contexte, tant des métaux purs que, surtout, des alliages métalliques.

L'arbre de coulée comprend normalement, à part au moins un modèle, un support de pièce comprenant un distributeur destiné à conformer au moins un canal de coulée dans le moule, qui servira à assurer l'arrivée du métal fondu dans la cavité de moulage lors de la coulée. Afin de pouvoir produire plusieurs pièces simultanément, il est possible d'intégrer plusieurs modèles en grappe dans un seul arbre de coulée.

Afin d'augmenter les cadences de production, il est possible de fabriquer tant les modèles que des différents éléments du support de pièce par moulage-injection. Toutefois, avec la complexité croissante des modèles individuels et des grappes de modèles dans les arbres de coulée, l'assemblage des arbres de coulée à partir de plusieurs éléments séparés devient simultanément plus nécessaire et plus complexe à réaliser. Typiquement, les différents éléments d'un arbre de coulée sont manuellement assemblés et collés, ce qui, avec une complexité accrue de l'arbre et des tolérances de positionnement et alignement de plus en plus étroites, notamment pour la fonderie monocristalline, ne cesse d'augmenter le coût et temps d'assemblage.

### Objet et résumé de l'invention

La présente invention vise à remédier à ces inconvénients. En particulier, cette divulgation vise à proposer un arbre de coulée pour fonderie à modèle perdu, incluant au moins un support de pièce, au moins un modèle, à assemblage simplifié et plus facilement automatisable.

Ce but est atteint grâce au fait que l'arbre de coulée comprend aussi au moins une première connexion mâle-femelle reliant ledit modèle au support de pièce, et comprenant un orifice, un pion au moins partiellement inséré à l'intérieur de l'orifice, et une pellicule de matériau fusible intercalée entre une surface externe du pion et une surface interne de l'orifice. Le pion peut notamment être solidaire du modèle et l'orifice être formé dans le support de pièce, ou inversement.

Grâce à la connexion mâle-femelle, l'assemblage de l'arbre de coulée peut être simplifié et automatisé, tout en assurant un positionnement précis des différents éléments. En même temps, la pellicule de matériau fusible intercalée entre la surface externe du pion et la surface interne de l'orifice permet de solidariser l'un à l'autre, de manière à maintenir cette première connexion mâle-femelle.

Afin d'assurer la précision du positionnement relatif du pion et l'orifice de cette première connexion mâle-femelle dans au moins une direction sensiblement orthogonale à un axe d'insertion du pion dans l'orifice, cette première connexion mâle-femelle présente au moins deux points de contact direct de la surface externe du pion avec la surface interne de l'orifice, mutuellement décalés dans au moins cette direction sensiblement orthogonale à l'axe d'insertion du pion dans l'orifice. Dans le présent contexte, on entend par « sensiblement orthogonale » une orientation proche d'un angle droit, dans les limites des tolérances de fabrication et mesure. Cette orientation peut donc correspondre, par exemple, à un angle de 90°±5°. Au moins un desdits points de contact peut être formé par une protubérance, radiale par rapport audit axe d'insertion, sur la surface externe du pion et/ou la surface interne de l'orifice, ce qui permet de maintenir ailleurs un écart radial entre la surface externe du pion et la surface interne de l'orifice, écart radial contenant ladite pellicule de matériau fusible.

Afin de mieux assurer le positionnement et l'orientation précis du modèle par rapport au support de pièce sur plusieurs axes, l'arbre de coulée peut comprendre en outre une deuxième connexion mâle-femelle reliant ledit modèle au support de pièce, et comprenant aussi un orifice, un pion au moins partiellement inséré à l'intérieur de l'orifice, et une pellicule de matériau fusible intercalée entre une surface externe du pion et une surface interne de l'orifice, lesdites première et deuxième connexions mâle-femelle présentant des axes d'insertion des pions dans les orifices respectifs qui sont sensiblement parallèles et décalés l'un par rapport à l'autre dans une direction orthogonale auxdits axes d'insertion. Dans le présent contexte, on entend par « sensiblement parallèle » une orientation parallèle ou presque, dans les limites des tolérances de fabrication et mesure. Cette orientation peut donc correspondre, par exemple, à un angle de 0°±5°. En particulier, ladite première connexion mâle-femelle peut présenter au moins deux points de contact direct de la surface externe du pion avec la surface interne de l'orifice, mutuellement décalés dans au moins une première direction sensiblement orthogonale aux axes d'insertion des pions dans les orifices, et ladite deuxième connexion mâle-femelle présenter au moins un point de contact direct de la surface externe du pion avec la surface externe de l'orifice, ledit point de contact de la deuxième connexion mâle-femelle étant décalé par rapport auxdits points de contact de la première connexion mâle-femelle dans au moins une deuxième direction sensiblement orthogonale à la première direction et aux axes d'insertion des pions dans les orifices. Ainsi, avec au moins trois points de contact non alignés, il est possible d'obtenir un positionnement et orientation précis, dans les trois axes, du modèle par rapport au support de pièce.

Pour faciliter encore plus l'assemblage, ladite première connexion mâle-femelle peut présenter au moins trois points de contact direct de la surface externe du pion avec la surface interne de l'orifice, de manière à fixer une position relative du modèle par rapport au support de pièce, et ladite deuxième connexion mâle-femelle présenter deux points de contact direct de la surface externe du pion avec la surface interne de l'orifice, lesdits deux points de contact de la deuxième connexion mâle-femelle étant décalés mutuellement dans au moins une direction sensiblement orthogonale à un plan reliant lesdits axes d'insertion, de manière à fixer l'orientation relative du modèle par rapport au support de pièce.

Afin de mieux bloquer le modèle par rapport au support de pièce, l'arbre de coulée peut comprendre une autre connexion du modèle au support de pièce, opposée à la première connexion mâle-femelle dans la direction d'un axe d'insertion du pion dans l'orifice de ladite première connexion mâle-femelle. Cette autre connexion peut être une simple connexion collée, quoiqu'elle puisse comprendre aussi des repères physiques pour assurer le positionnement et l'orientation du modèle par rapport au support de pièce.

Ledit support de pièce peut comprendre un distributeur destiné à conformer au moins un canal de coulée dans un moule, ladite première connexion mâle-femelle reliant ledit modèle audit distributeur. En outre, l'arbre de coulée peut comprendre une pluralité de modèles reliés en grappe au support de pièce.

La présente divulgation se rapporte aussi à un procédé d'assemblage d'un arbre de coulée pour fonderie à modèle perdu, comprenant au moins les étapes d'insertion au moins partielle d'au moins un pion dans au moins un orifice correspondant, de manière à créer au moins une première connexion mâle-femelle entre au moins un modèle et un support de pièce, ladite connexion mâle-femelle présentant au moins deux points de contact direct de la surface externe du pion avec la surface interne de l'orifice, mutuellement décalés dans au moins cette direction sensiblement orthogonale à l'axe d'insertion du pion dans l'orifice, infiltration d'un matériau fusible à l'état liquide entre au moins une surface extérieure dudit pion et une surface intérieure dudit orifice dans la première connexion mâle-femelle, et solidification du matériau fusible infiltré entre la surface extérieure du pion et la surface intérieure de l'orifice de manière à former une pellicule de matériau fusible intercalée au moins entre une surface externe du pion et une surface interne de l'orifice pour consolider la première connexion mâle-femelle. En particulier, l'étape d'infiltration peut être effectuée en plongeant au moins la première connexion mâle-femelle dans un bain dudit matériau fusible à l'état liquide. Par ce procédé, dit « dip sealing » en anglais, la connexion mâle-femelle peut être rapidement consolidée de manière facilement automatisable.

La présente divulgation se rapporte aussi à un procédé de production d'un moule de fonderie, comprenant l'assemblage d'un arbre de coulée suivant le procédé d'assemblage susmentionné, l'enrobage dudit arbre de coulée dans un matériau réfractaire pour former le moule, et l'évacuation de l'arbre de coulée de l'intérieur du moule. En particulier, l'arbre de coulée peut être en matériau fusible à température inférieure audit matériau réfractaire et être évacué du moule à l'état liquide. En outre, l'enrobage peut être mis en oeuvre en trempant l'arbre de coulée dans une barbotine, saupoudrant l'arbre de coulée avec un sable réfractaire afin de former une carapace autour de l'arbre de coulée, et frittant cette carapace afin de la consolider. Plusieurs trempages et saupoudrages successifs peuvent être envisagés afin d'obtenir une carapace d'une épaisseur suffisante avant son frittage.

La présente divulgation se rapporte aussi à un procédé de fonderie comprenant la production d'un moule de fonderie suivant le procédé de production susmentionné, la coulée d'un matériau métallique en fusion dans l'intérieur dudit moule, la solidification du matériau métallique dans le moule, et le décochage du moule.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 illustre schématiquement en perspective un arbre de coulée suivant un mode de réalisation ;
- la figure 2 est une vue en coupe de deux connexions mâle-femelle adjacentes reliant un modèle à un distributeur dans l'arbre de coulée de la figure 1 ;
- la figure 3 illustré schématiquement une première étape d'assemblage de l'arbre de coulée de la figure 1 ;
- la figure 4 illustre schématiquement en perspective une deuxième étape d'assemblage de l'arbre de coulée de la figure 1 ;
- la figure 5 illustre le distributeur de l'arbre de coulée de la figure 1, avec les orifices correspondant auxdites connexions mâle-femelle ;
- la figure 6 est une vue de détail d'un des modèles intégrés dans l'arbre de coulée de la figure 1, illustrant en particulier deux pions correspondant auxdites connexions mâle-femelle ;
- la figure 7 illustre schématiquement en perspective une troisième étape d'assemblage de l'arbre de coulée de la figure 1 ;
- la figure 8 illustre l'insertion des pions dans les orifices correspondants pour former lesdites connexions mâle-femelle ;
- les figures 9A et 9B illustrent deux arrangement alternatifs pour les connexions mâle-femelle entre chaque modèle et le support de pièce
- la figure 10 illustre l'insertion d'une extrémité inférieure du modèle dans une concavité dans une base d'un support de pièce ;
- la figure 11 illustre schématiquement en perspective une quatrième étape d'assemblage de l'arbre de coulée de la figure 1 ;
- la figure 12 illustre schématiquement une cinquième étape d'assemblage de l'arbre de coulée de la figure 1 ;
- la figure 13 illustre schématiquement une sixième étape d'assemblage de l'arbre de coulée de la figure 1 ;
- la figure 14 illustre schématiquement en perspective une septième étape d'assemblage de l'arbre de coulée de la figure 1 ;
- la figure 15 schématiquement en perspective une septième étape d'assemblage de l'arbre de coulée de la figure 1 ;
- la figure 16 illustre schématiquement l'infiltration d'une pellicule liquide dans les interstices d'une des connexions mâle-femelle ;
- la figure 17 illustre schématiquement en perspective une huitième étape d'assemblage de l'arbre de coulée de la figure 1 ; et
- la figure 18 illustre un moule-carapace formé autour de l'arbre de coulée de la figure 1.

### Description détaillée de l'invention

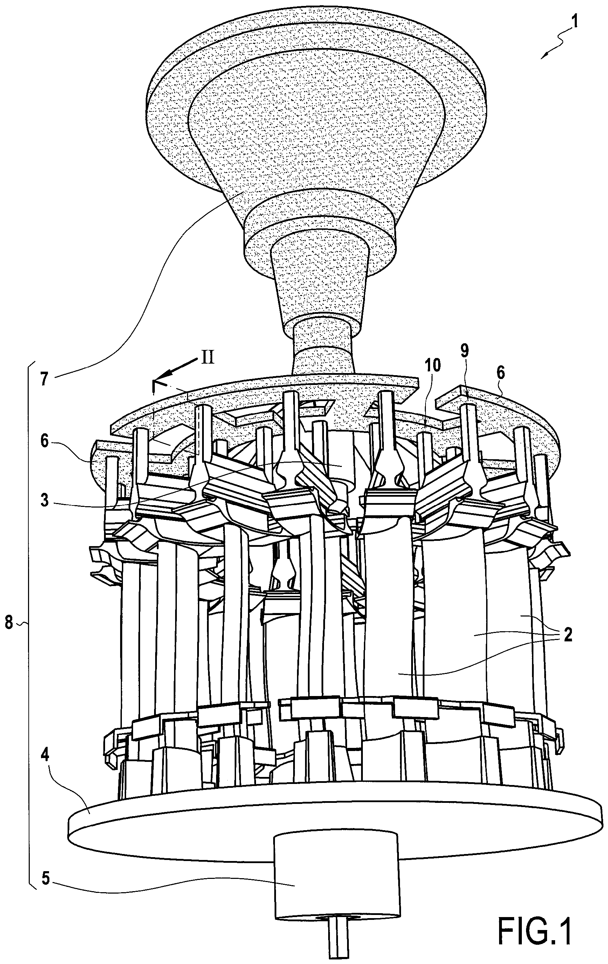

La figure 1 illustre un arbre de coulée 1 suivant un mode de réalisation de l'invention. Cet arbre de coulée 1, réalisé en matériau fusible à point de fusion comparativement peu élevé, notamment cire ou résine, est destiné à former les cavités internes d'un moule de fonderie obtenu par le procédé dit à cire perdue ou modèle perdu, dans lequel l'arbre de coulée est d'abord enrobé de matériau réfractaire pour former le moule, et ensuite évacué à l'état liquide de l'intérieur du moule. L'arbre de coulée 1 illustré comprend ainsi une pluralité de modèles 2 arrangés en grappe autour d'un descendant 3 soutenu par une base 4 et une rehausse 5 et couronné par un distributeur 6 en forme de couronne et un godet 7. Ensemble, la rehausse 5, la base 4, le descendant 3, le distributeur 6 et le godet 7 forment un support de pièces 8 pour les modèles 2, qui reproduisent chacun la forme d'une pièce de fonderie à produire. Dans le cas illustré, les modèles 2 reproduisent ainsi la forme d'aubes de turbomachine, quoique d'autres applications soient également envisageables. Le distributeur 6 est destiné à conformer dans le moule les canaux de coulée pour amener le métal en fusion aux cavités de moulage conformés par les modèles 2, à partir d'un entonnoir conformé par le godet 7.

Chacun des éléments de l'arbre de coulée 1 peut être produit séparément, par exemple par moulage-injection. Pour produire ces éléments, et notamment ceux du support de pièces 8, il est par ailleurs envisageable d'utiliser un matériau recyclé, provenant de l'évacuation de moules produits précédemment. Il est néanmoins important d'assurer un positionnement précis des éléments dans l'arbre de coulée 1, surtout en vue de la mise en oeuvre de procédés de fonderie délicats, comme la fonderie monocristalline.

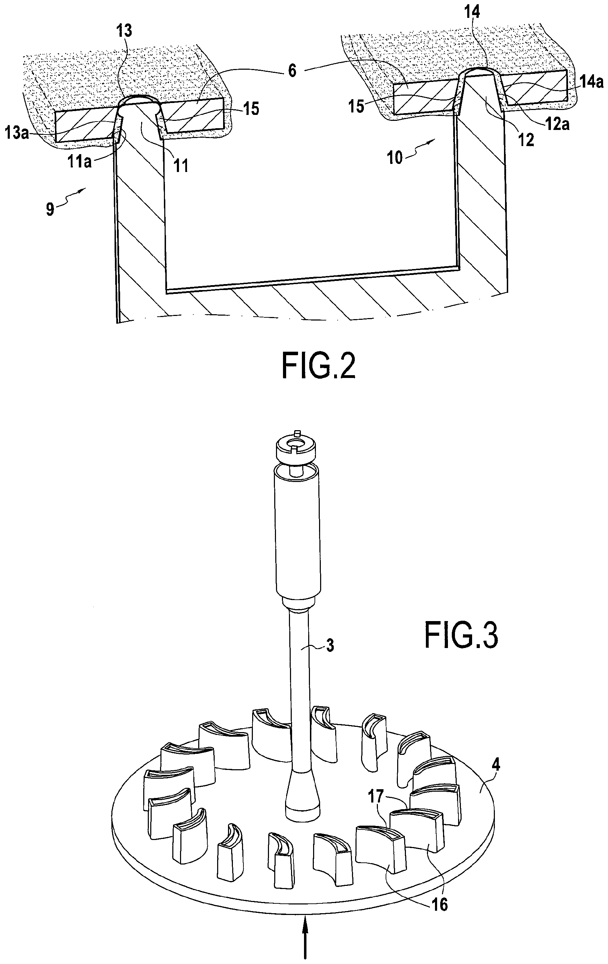

Ainsi, dans l'arbre de coulée 1 illustré sur la figure 1, chaque modèle 2 est relié au distributeur 6 par une paire de connexions mâle-femelle 9, 10. Comme illustré sur la figure 2, chacune de ces connexions mâle-femelle 9,10 comprend un pion 11,12 et un orifice 13, 14, dans lequel ledit pion 11, 12 est reçu. Dans ce mode de réalisation, afin de faciliter l'insertion des pions 11, 12 dans les orifices 13,14 correspondants, chaque pion 11, 12 présente une surface externe 11a,12a tronconique et convergeant dans le sens d'insertion des pions, et chaque orifice 13,14 présente aussi une surface interne 13a,14a également tronconique et convergeant dans le sens d'insertion des pions. Suivant notamment les possibilités de fabrication de ces éléments, d'autres formes convergentes, par exemple étagées, peuvent être considérées alternativement ou en complément à ces formes tronconiques.

Par ailleurs, dans chacune des connexions mâle-femelle 9,10 une pellicule 15 de matériau fusible est intercalée entre la surface externe 11a,12a du pion 11,12 et la surface interne 13a,14a de l'orifice 13,14. Cette pellicule 15, adhérant tant à la surface externe du pion 11,12 comme à la surface interne de l'orifice 13,14 consolide chaque connexion mâle-femelle 9,10.

La figure 3 illustre une première étape d'assemblage de l'arbre de coulée 1, dans laquelle on joint le descendant 3 à la base 4. Comme l'on peut apprécier sur cette figure, la base 4 comprend des soutiens 16 individuels et surélevés pour chaque modèle 2, chacun de ces soutiens 16 présentant à son sommet une concavité 17 avec un contour complémentaire de celui de l'extrémité inférieure de chaque modèle 2. Ainsi, cette concavité 17 est destinée à faciliter le positionnement et orientation corrects des modèles 2 dans l'arbre de coulée 1.

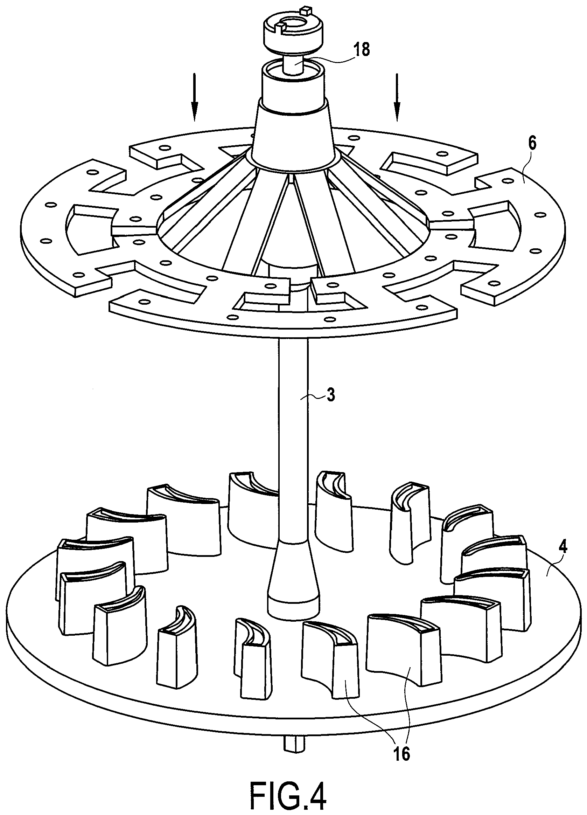

La figure 4 illustre une deuxième étape d'assemblage de l'arbre de coulée 1, dans laquelle le distributeur 6 est placé sur le descendant 3. Une tige centrale 18 verticalement en saillie par rapport au descendant 3 permet de fixer horizontalement le distributeur 6 par rapport au descendant 3, tout en continuant à permettre un certain débattement vertical.

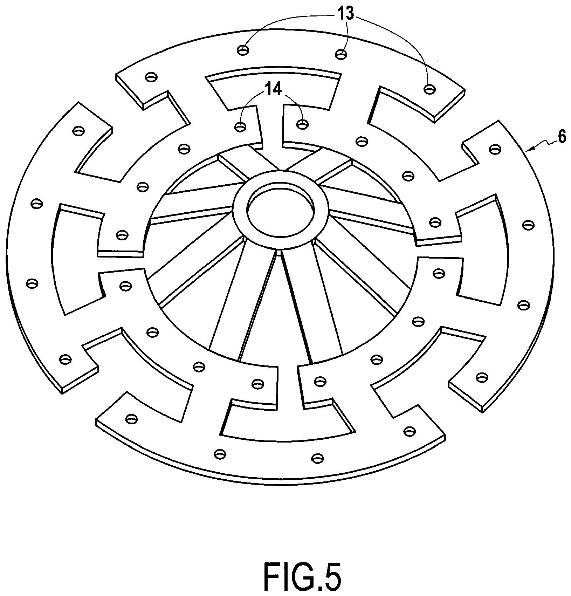

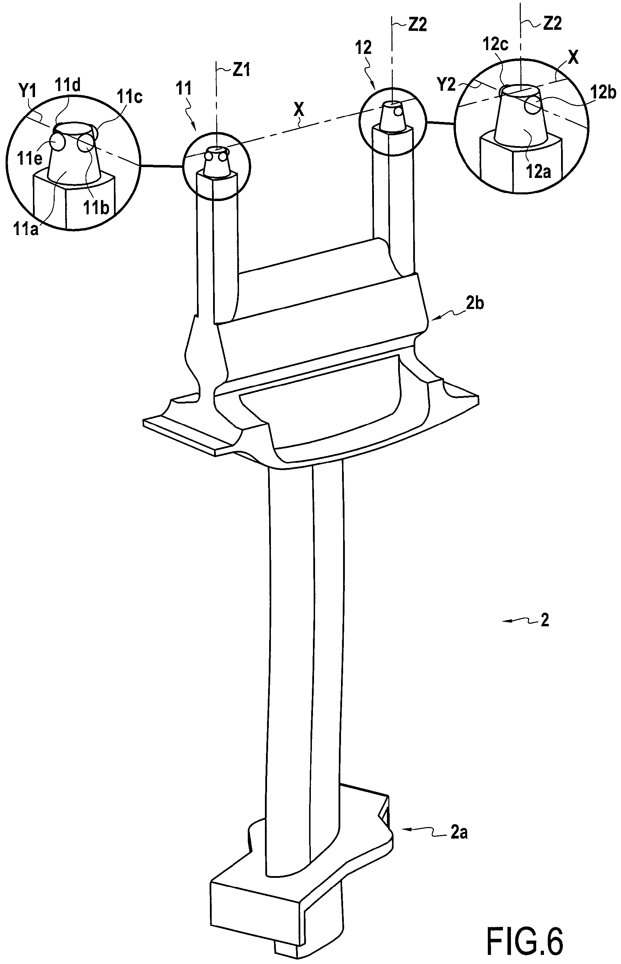

Comme illustré sur la figure 5, dans ce mode de réalisation les orifices 13,14 des connexions mâle-femelle 9,10 sont des orifices formés dans le distributeur 6 et le traversant verticalement. Ainsi, les pions 11, 12 complémentaires seront formés sur les modèles 2, comme illustré sur la figure 6. Toutefois, il est également envisageable d'inverser cet arrangement, bien pour une seule des connexions mâle-femelle, bien pour les deux.

Comme l'on peut voir en particulier sur la figure 6, dans ce mode de réalisation les modèles 2 sont destinés à la production d'aubes de turbomachine et reproduisent donc la forme de ces aubes. Toutefois, il est aussi envisageable d'utiliser un arbre de coulée et un procédé d'assemblage suivant l'invention dans la production d'autres pièces, et la forme des modèles serait adaptée en conséquence. Dans ce mode de réalisation chaque modèle 2 est orienté vers le bas, avec donc une extrémité inférieure 2a en forme de tête d'aube, et une extrémité supérieure 2b en forme de pied d'aube, sur laquelle sont intégrés les pions 11, 12, orientés suivant des axes d'insertion Z1,Z2 sensiblement parallèles et décalés l'un par rapport à l'autre en une direction X orthogonale. La surface externe 11a du pion 11 de la première connexion mâle-femelle 9 présente quatre protubérances 11b,11c,11d et 11e orientées sur des différents axes radiaux par rapport à l'axe d'insertion Z1. Chacune de ces protubérances 11b à 11e est en forme de calotte sphérique, quoique d'autres formes soient également envisageables. D'autre part, la surface externe 12a du pion 12 de la deuxième connexion mâle-femelle 10 présente deux protubérances 12b, 12c orientées en sens opposés sur un axe Y2 orthogonal à l'axe d'insertion Z2 et à la direction X de décalage des deux axes d'insertion Z1, Z2.

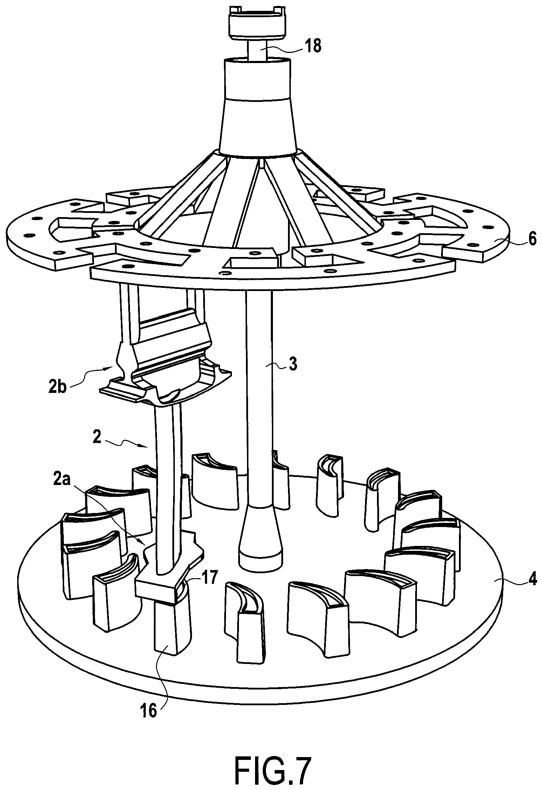

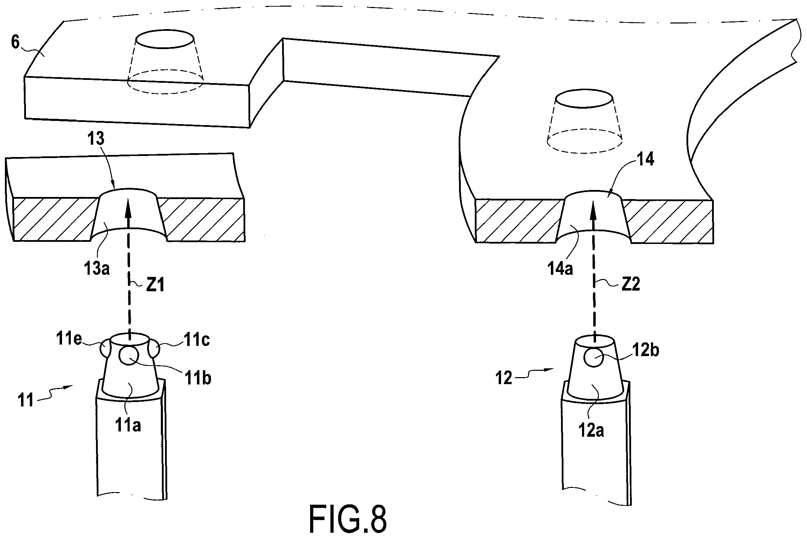

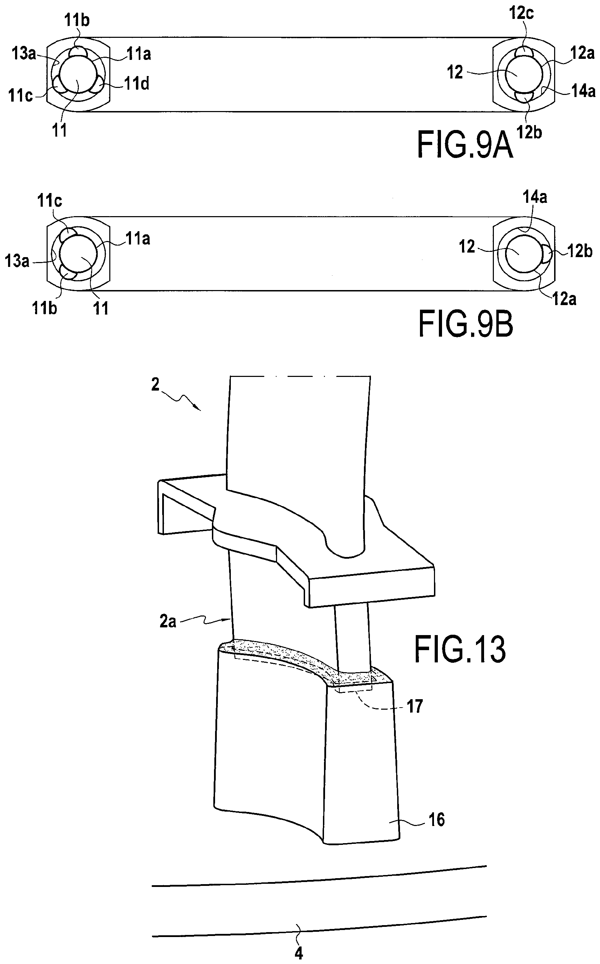

La figure 7 illustre schématiquement la mise en place d'un premier modèle 2 entre la base 4 et le distributeur 6. Lors de cette mise en place, avec le modèle d'abord légèrement incliné, on insère les pions 11, 12 dans les orifices 13, 14 suivant les axes d'insertion Z1, Z2, comme illustré sur la figure 8. Lors de cette insertion, les protubérances 11b,11c,11d et 11d et 12b et 12c vont former des points de contact direct des surfaces externes 11a,12a des pions 11,12 avec les surfaces internes 13a,14a des orifices 13, 14, de manière à maintenir ailleurs un écart radial entre les surfaces externes 11a,12a des pions 11,12 et les surfaces internes 13a,14a des orifices 13, 14, tout en maintenant un positionnement et orientation relatifs précis de chaque modèle 2 par rapport au distributeur 6. Cet écart radial est à son tour destiné à être au moins partiellement comblé par l'infiltration d'un matériau fusible à l'état liquide lors d'une étape subséquente, formant ainsi la pellicule 15. Bien que dans le mode de réalisation illustré toutes ces protubérances soient formées sur les surfaces externes des pions, il est également envisageable, alternativement ou en complément à celles-ci, de former des points de contact avec des protubérances radiales sur les surfaces internes 13a,14a des orifices 13, 14. Par ailleurs, le nombre de protubérances peut aussi varier : ainsi, on peut déjà obtenir un positionnement précis du premier pion 11 avec seulement trois protubérances radiales 11b,11c,11d, comme illustré sur la figure 9A, ou même un positionnement et orientation précis du modèle 2 par rapport au distributeur 6 avec seulement deux protubérances radiales 11b,11c sur le premier pion 11 et une seule protubérance radiale 12b sur le deuxième pion 12, comme illustré sur la figure 9B, pour autant que les points de contact ne soient pas alignés sur un plan reliant les axes d'insertion Z1,Z2 ou parallèle à celui-ci.

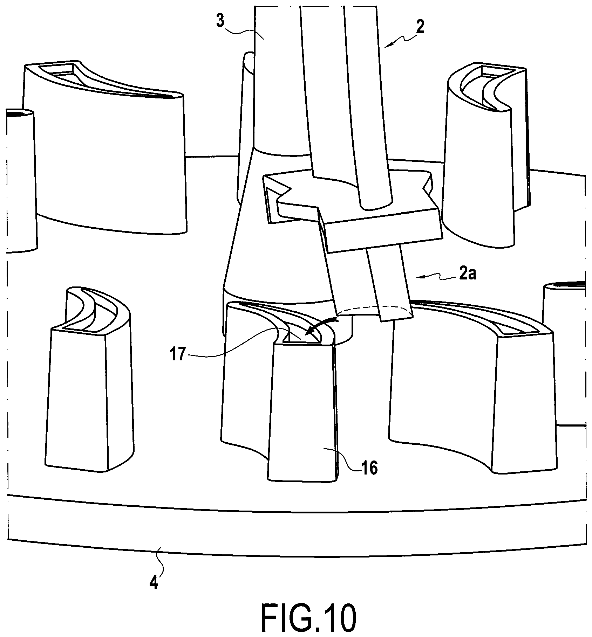

Après l'insertion des pions 11,12 dans les orifices 13,14, le modèle 2 est basculé vers la verticale tout en le soulevant légèrement jusqu'à aligner son extrémité inférieure 2a avec la concavité 17 sur le support 16 pour l'y insérer, comme illustré sur la figure 10.

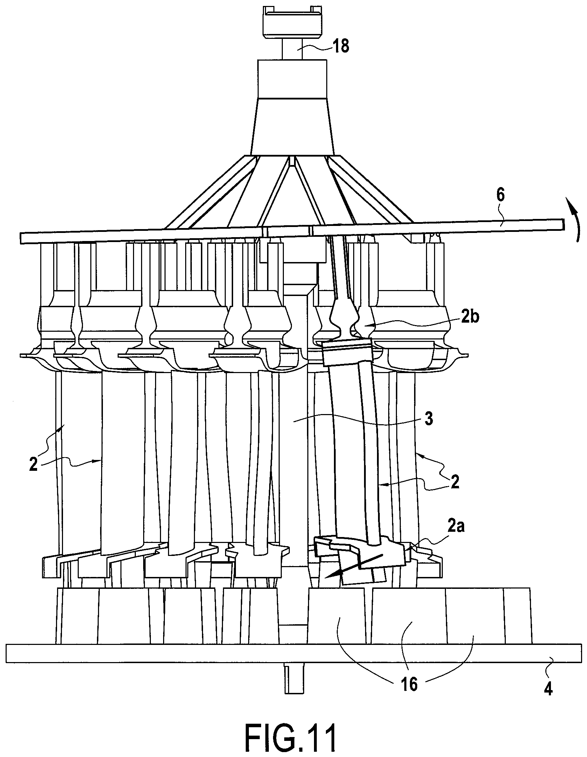

Le reste des modèles 2 est ensuite inséré successivement et de manière analogue entre la base 4 et le distributeur 6, comme illustré sur la figure 11. Les concavités 17 dans les soutiens 16 sur la base 4 étant sensiblement moins profondes que les pions 11,12 et les orifices 13,14 sur le distributeur 6, il est possible de limiter le déplacement vertical du distributeur 6 lors du basculement de chaque modèle 2 vers la verticale après insertion de ses pions 11,12 dans les orifices 13,14 correspondants, de manière à éviter que les pions 11, 12 des modèles 2 déjà installés ressortent des autres orifices 13,14.

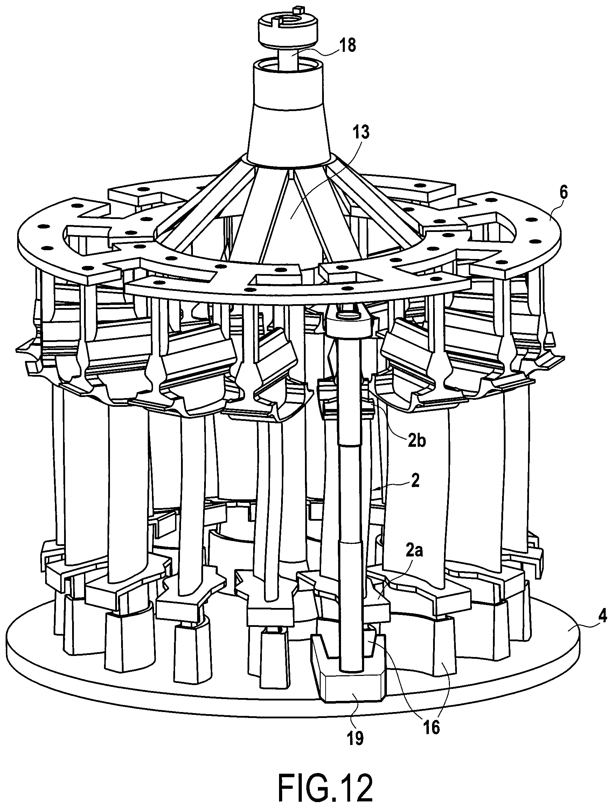

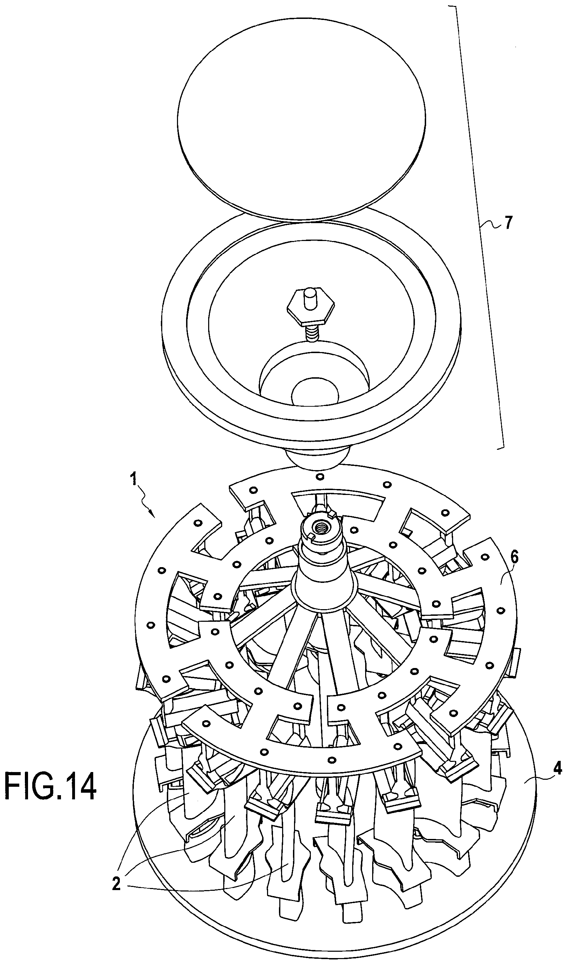

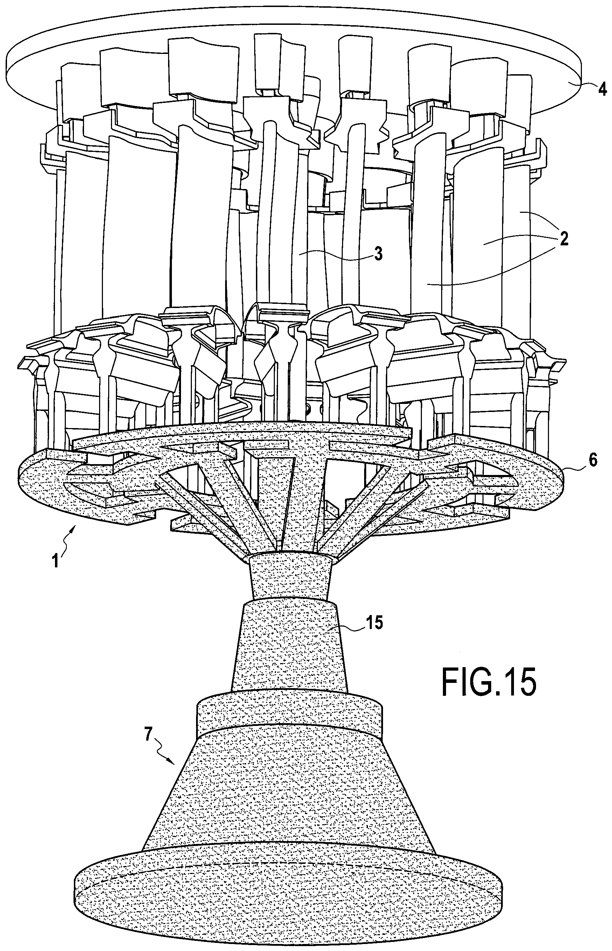

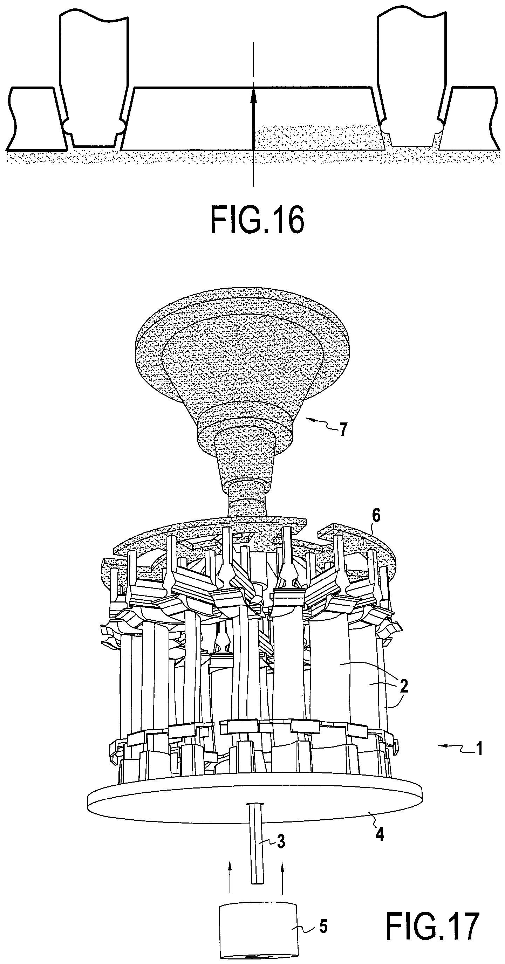

Après installation de l'ensemble des modèles 2 en grappe autour du descendant 3, on peut procéder à la vérification de leur alignement avec un calibre 19, comme illustré sur la figure 12. Une fois que cet alignement est bien vérifié, le distributeur 6 peut être bloqué en le collant au descendant 3, et les extrémités inférieures des modèles 2 peuvent également être collées à leurs soutiens 16 respectifs sur la base 4, comme illustré sur la figure 13. On procède ensuite au positionnement du godet 7 sur le distributeur 6, comme illustré sur la figure 14, et au renversement de l'ensemble pour plonger l'ensemble, jusqu'aux modèles 2, dans un bain de matériau fusible à l'état liquide, comme illustré sur la figure 15. Ce matériau fusible présente un point de fusion inférieur à celui des éléments plongés dans celui-ci, et peut notamment être une cire à l'état liquide. Le bain liquide peut ainsi être maintenu à une température inférieure au point de fusion des éléments brièvement plongés dans celui-ci, de manière à empêcher leur fusion même partielle. Pendant ce bain, le matériau liquide du bain pénètre dans les interstices entre les éléments plongés, et notamment dans les interstices entre surfaces extérieures 11a,12a des pions 11,12 et surfaces intérieures 13a,14a des orifices 13,14, comme illustré sur la figure 16. Après le retrait de ce bain liquide de l'arbre de coulée 1 en cours d'assemblage, une partie du matériau liquide du bain reste adhérée aux surfaces exposées ayant été plongées dans le bain, se refroidit et solidifie, formant une pellicule 15 solide autour de ces surfaces exposées et dans les interstices entre les éléments qui ont été plongés, y compris entre les surfaces externes 11a,12a des pions 11,12 et les surfaces internes 13a,14a des orifices 13,14 correspondants, de manière à consolider chaque connexion mâle-femelle 9,10 entre modèles 2 et distributeur 6. Les interstices entre le distributeur 6 et les modèles 2, le descendant 3 et le godet 7 sont aussi au moins partiellement comblés par cette pellicule 15, qui contribue donc aussi de cette manière à consolider l'arbre de coulée 1 en cours d'assemblage. Ce procédé d'assemblage est finalisé en collant la rehausse 5 sous la base 4, comme illustré sur la figure 17, pour obtenir l'arbre de coulée 1 tel qu'illustré sur la figure 1.

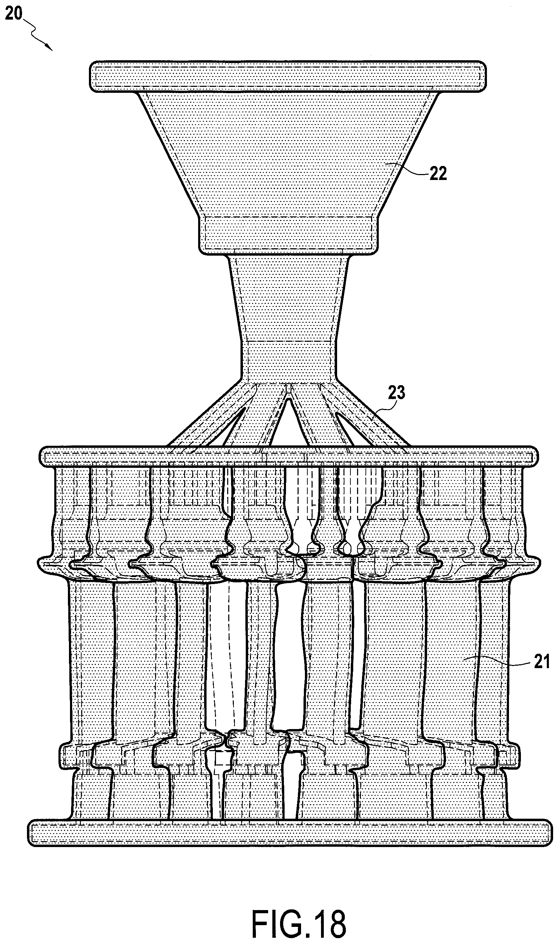

Cet arbre de coulée 1 peut ensuite servir à produire un moule carapace 20 comme celui illustré sur la figure 18. Pour cela, on répète d'abord plusieurs fois une séquence comprenant un trempage de l'arbre de coulée 1 dans une barbotine et saupoudrage subséquent de l'arbre de coulée avec du sable réfractaire. Ensuite, on procède au frittage de la carapace de sable réfractaire et barbotine ainsi formée par cuisson dans un four. Le matériau fusible formant l'arbre de coulée 1 fondant sous les hautes températures dans le four, il peut être facilement évacué à l'état liquide du moule carapace 20 ainsi crée.

Dans ce moule carapace 20, les modèles 2 créent des cavités de moulage 21, le godet 7 un entonnoir de coulée 22, et le distributeur 6 des canaux de coulée 23 reliant l'entonnoir 22 aux cavités 21. Le moule 20 peut donc être utilisé dans un procédé de fonderie comprenant une étape de coulée d'un matériau métallique en fusion dans l'intérieur du moule 20, dans laquelle le matériau métallique en fusion remplit les cavités 21 à travers l'entonnoir 22 et les canaux 23, suivie d'une étape de solidification du matériau métallique dans le moule 20, solidification pouvant être dirigée pour obtenir par exemple des pièces monocristallines. Finalement, le moule 20, naturellement friable, peut être décoché pour libérer les pièces ainsi formées au sein des cavités de moulage 21, et dont la forme reproduira celle des modèles 2.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Arbre de coulée (1) pour fonderie à modèle perdu, incluant au moins un support de pièce (8), au moins un modèle (2), et au moins une première connexion mâle-femelle (9) reliant ledit modèle (2) au support de pièce (8), ladite première connexion mâle-femelle (9) comprenant un orifice (13), un pion (11) au moins partiellement inséré à l'intérieur de l'orifice (13), et une pellicule (15) de matériau fusible intercalée au moins entre une surface externe (11a) du pion (11) et une surface interne (13a) de l'orifice (13), **caractérisé en ce que** ladite première connexion mâle-femelle (9) présente au moins deux points de contact direct de la surface externe (11a) du pion (11) avec la surface interne (13a) de l'orifice (13), mutuellement décalés dans au moins une direction sensiblement orthogonale à un axe d'insertion (Z1) du pion (11) dans l'orifice (13).

2. Arbre de coulée (1) suivant la revendication 1, dans lequel au moins un desdits points de contact est formé par une protubérance (11b,11c,11d,11e), radiale par rapport audit axe d'insertion (Z1), sur la surface externe du pion (11) et/ou la surface interne de l'orifice (13).

3. Arbre de coulée (1) suivant l'une quelconque des revendications 1 ou 2, comprenant en outre une deuxième connexion mâle-femelle (10) reliant ledit modèle (2) au support de pièce (8), et comprenant aussi un orifice (14), un pion (12) au moins partiellement inséré à l'intérieur de l'orifice (14), et une pellicule (15) de matériau fusible intercalée entre une surface externe (12a) du pion (12) et une surface interne (14a) de l'orifice (14), lesdites première et deuxième connexions mâle-femelle (9,10) présentant des axes d'insertion (Z1,Z2) des pions (11,12) dans les orifices (13,14) respectifs qui sont sensiblement parallèles et décalés l'un par rapport à l'autre dans une direction (X) orthogonale auxdits axes d'insertion (Z1,Z2).

4. Arbre de coulée (1) suivant la revendication 3, dans lequel ladite première connexion mâle-femelle (9) présente au moins deux points de contact direct de la surface externe (11a) du pion (11) avec la surface interne (13a) de l'orifice (13), mutuellement décalés dans au moins une première direction sensiblement orthogonale aux axes d'insertion (Z1,Z2) des pions (11,12) dans les orifices (13,14), et ladite deuxième connexion mâle-femelle (10) présente au moins un point de contact direct de la surface externe (12a) du pion (12) avec la surface interne (14a) de l'orifice (14), ledit point de contact de la deuxième connexion mâle-femelle (10) étant décalé par rapport auxdits points de contact de la première connexion mâle-femelle (9) dans au moins une deuxième direction sensiblement orthogonale à la première direction et aux axes d'insertion (Z1,Z2) des pions (11,12) dans les orifices (13,14).

5. Arbre de coulée (1) suivant la revendication 3, dans lequel ladite première connexion mâle-femelle (9) présente au moins trois points de contact direct de la surface externe (11a) du pion (11) avec la surface interne (13a) de l'orifice (13), et ladite deuxième connexion mâle-femelle (10) présente deux points de contact direct de la surface externe (12a) du pion (12) avec la surface interne (14a) de l'orifice (14), lesdits deux points de contact de la deuxième connexion mâle-femelle (10) étant décalés mutuellement dans au moins une direction (Y2) sensiblement orthogonale à un plan reliant lesdits axes d'insertion (Z1,Z2).

6. Arbre de coulée (1) suivant l'une quelconque des revendications 1 à 5, comprenant une autre connexion du modèle (2) au support de pièce (8), opposée à la première connexion mâle-femelle (9) dans la direction d'un axe d'insertion (Z1) du pion (11) dans l'orifice (13) de ladite première connexion mâle-femelle (9).

7. Arbre de coulée (1) suivant l'une quelconque des revendications 1 à 6, dans lequel ledit support de pièce (8) comprend un distributeur (6) destiné à conformer au moins un canal de coulée (23) dans un moule (20), ladite première connexion mâle-femelle (9) reliant ledit modèle (2) audit distributeur (6).

8. Arbre de coulée (1) suivant l'une quelconque des revendications 1 à 7, comprenant une pluralité de modèles (2) reliés en grappe au support de pièce (8).

9. Procédé d'assemblage d'un arbre de coulée (1) pour fonderie à modèle perdu, comprenant au moins les étapes suivantes :
insertion au moins partielle d'au moins un pion (11) dans au moins un orifice (13) correspondant, de manière à créer au moins une première connexion mâle-femelle (9) entre au moins un modèle (2) et un support de pièce (8), ladite première connexion mâle-femelle (9) présentant au moins deux points de contact direct de la surface externe (11a) du pion (11) avec la surface interne (13a) de l'orifice (13), mutuellement décalés dans au moins une direction sensiblement orthogonale à un axe d'insertion (Z1) du pion (11) dans l'orifice (13) ;
infiltration d'un matériau fusible à l'état liquide entre au moins une surface extérieure (11a) dudit pion (11) et une surface intérieure (13a) dudit orifice (13) dans la première connexion mâle-femelle (9) ;
solidification du matériau fusible infiltré entre la surface extérieure du pion et la surface intérieure de l'orifice de manière à former une pellicule (15) de matériau fusible intercalée au moins entre une surface externe (11a) du pion (11) et une surface interne (13a) de l'orifice (13) pour consolider la première connexion mâle-femelle (9).

10. Procédé d'assemblage suivant la revendication 9, dans lequel l'étape d'infiltration est effectuée en plongeant au moins la première connexion mâle-femelle (9) dans un bain dudit matériau fusible à l'état liquide.

11. Procédé de production d'un moule de fonderie (20), comprenant les étapes suivantes :
assemblage d'un arbre de coulée (1) suivant le procédé des revendications 9 ou 10 ;
enrobage dudit arbre de coulée dans un matériau réfractaire pour former le moule ; et
évacuation de l'arbre de coulée (1) de l'intérieur du moule (20).

12. Procédé de production d'un moule de fonderie suivant la revendication 11, dans lequel ledit arbre de coulée (1) est en matériau fusible à température inférieure audit matériau réfractaire et est évacué du moule (20) à l'état liquide.

13. Procédé de production d'un moule de fonderie (20) suivant l'une quelconque des revendications 11 ou 12, dans lequel ladite étape d'enrobage est mise en oeuvre en trempant l'arbre de coulée (1) dans une barbotine, saupoudrant l'arbre de coulée (1) avec un sable réfractaire afin de former une carapace autour de l'arbre de coulée, et frittant cette carapace afin de la consolider.

14. Procédé de fonderie comprenant au moins les étapes suivantes :
production d'un moule de fonderie (20) suivant le procédé de l'une quelconque des revendications 11 à 13 ;
coulée d'un matériau métallique en fusion dans l'intérieur dudit moule (20) ;
solidification du matériau métallique dans le moule (20) ; et
décochage du moule (20).

## Patentansprüche

1. Gussbaum (1) für ein Gießen mit verlorenem Modell, umfassend mindestens einen Werkstückhalter (8), mindestens ein Modell (2) und mindestens eine erste Stecker-Buchsen-Verbindung (9), die das Modell (2) mit dem Werkstückhalter (8) verbindet, wobei die erste Stecker-Buchsen-Verbindung (9) eine Öffnung (13), einen Zapfen (11), der zumindest teilweise in die Öffnung (13) eingeführt ist, und einen Film (15) aus schmelzbarem Material umfasst, der zumindest zwischen einer Außenfläche (11a) des Zapfens (11) und einer Innenfläche (13a) der Öffnung (13) angeordnet ist, **dadurch gekennzeichnet, dass** die erste Stecker-Buchsen-Verbindung (9) mindestens zwei Punkte des direkten Kontakts der Außenfläche (11a) des Zapfens (11) mit der Innenfläche (13a) der Öffnung (13) aufweist, die in mindestens einer Richtung zueinander versetzt sind, im Wesentlichen orthogonal zu einer Einschubachse (Z1) des Zapfens (11) in die Öffnung (13).

2. Gussbaum (1) nach Anspruch 1, wobei mindestens einer der Kontaktpunkte durch einen radial zur Einschubachse (Z1) ausgerichteten Vorsprung (11b, 11c, 11d, 11e) auf der Außenfläche des Zapfens (11) und/oder der Innenfläche der Öffnung (13) gebildet ist.

3. Gussbaum (1) nach einem der Ansprüche 1 oder 2, ferner umfassend eine zweite Stecker-Buchsen-Verbindung (10), die das Modell (2) mit dem Werkstückhalter (8) verbindet, und ebenfalls eine Öffnung (14), einen Zapfen (12), der zumindest teilweise in die Öffnung (14) eingeführt ist, und einen Film (15) aus schmelzbarem Material umfasst, der zwischen einer Außenfläche (12a) des Zapfens (12) und einer Innenfläche (14a) der Öffnung (14) angeordnet ist, wobei die ersten und zweiten Stecker-Buchsen-Verbindungen (9, 10) Einschubachsen (Z1, Z2) der Zapfen (11, 12) in die jeweiligen Öffnungen (13, 14) aufweisen, die im Wesentlichen parallel und relativ zueinander in einer zu den Einschubachsen (Z1, Z2) orthogonalen Richtung (X) versetzt sind.

4. Gussbaum (1) nach Anspruch 3, wobei die erste Stecker-Buchsen-Verbindung (9) mindestens zwei Punkte des direkten Kontakts der Außenfläche (11a) des Zapfens (11) mit der Innenfläche (13a) der Öffnung (13) aufweist, die in mindestens einer ersten Richtung, im Wesentlichen orthogonal zu den Einschubachsen (Z1, Z2) der Zapfen (11, 12) in die Öffnungen (13, 14), zueinander versetzt sind, und die zweite Stecker-Buchsen-Verbindung (10) mindestens einen Punkt des direkten Kontakts der Außenfläche (12a) des Zapfens (12) mit der Innenfläche (14a) der Öffnung (14) aufweist, wobei der Kontaktpunkt der zweiten Stecker-Buchsen-Verbindung (10) bezüglich der Kontaktpunkte der ersten Stecker-Buchsen-Verbindung (9) in mindestens einer zweiten Richtung, im Wesentlichen orthogonal zur ersten Richtung und zu den Einschubachsen (Z1, Z2) der Zapfen (11, 12) in die Öffnungen (13, 14), versetzt ist.

5. Gussbaum (1) nach Anspruch 3, wobei die erste Stecker-Buchsen-Verbindung (9) mindestens drei Punkte des direkten Kontakts der Außenfläche (11a) des Zapfens (11) mit der Innenfläche (13a) der Öffnung (13) aufweist und die zweite Stecker-Buchsen-Verbindung (10) zwei Punkte des direkten Kontakts der Außenfläche (12a) des Zapfens (12) mit der Innenfläche (14a) der Öffnung (14) aufweist, wobei die beiden Kontaktpunkte der zweiten Stecker-Buchsen-Verbindung (10) in mindestens einer Richtung (Y2) zueinander versetzt sind, die im Wesentlichen orthogonal zu einer Ebene ist, die die Einschubachsen (Z1, Z2) verbindet.

6. Gussbaum (1) nach einem der Ansprüche 1 bis 5, umfassend eine weitere Verbindung des Modells (2) mit dem Werkstückhalter (8), die der ersten Stecker-Buchsen-Verbindung (9) in Richtung einer Einschubachse (Z1) des Zapfens (11) in die Öffnung (13) der ersten Stecker-Buchsen-Verbindung (9) gegenüberliegt.

7. Gussbaum (1) nach einem der Ansprüche 1 bis 6, wobei der Werkstückhalter (8) einen Verteiler (6) aufweist, um mindestens einen Gießkanal (23) in einer Form (20) auszubilden, wobei die erste Stecker-Buchsen-Verbindung (9) das Modell (2) mit dem Verteiler (6) verbindet.

8. Gussbaum (1) nach einem der Ansprüche 1 bis 7, umfassend eine Vielzahl von Modellen (2), die gebündelt mit dem Werkstückträger (8) verbunden sind.

9. Verfahren zur Montage eines Gussbaums (1) für ein Gießen mit verlorenem Modell, umfassend mindestens die folgenden Schritte:
zumindest teilweises Einführen mindestens eines Zapfens (11) in mindestens eine entsprechende Öffnung (13), sodass mindestens eine erste Stecker-Buchsen-Verbindung (9) zwischen mindestens einem Modell (2) und einem Werkstückhalter (8) hergestellt wird, wobei die erste Stecker-Buchsen-Verbindung (9) mindestens zwei Punkte des direkten Kontakts der Außenfläche (11a) des Zapfens (11) mit der Innenfläche (13a) der Öffnung (13) aufweist, die in mindestens einer Richtung, im Wesentlichen orthogonal zu einer Einschubachse (Z1) des Zapfens (11) in die Öffnung (13), versetzt sind,
Infiltrieren eines schmelzbaren Materials im flüssigen Zustand zwischen mindestens eine Außenfläche (11a) des Zapfens (11) und eine Innenfläche (13a) der Öffnung (13) in der ersten Stecker-Buchsen-Verbindung (9),
Erstarren des schmelzbaren Materials, das zwischen der Außenfläche des Zapfens und der Innenfläche der Öffnung infiltriert ist, um einen Film (15) aus schmelzbaren Material zu bilden, der zumindest zwischen einer Außenfläche (11a) des Zapfens (11) und einer Innenfläche (13a) der Öffnung (13) angeordnet ist, um die erste Stecker-Buchsen-Verbindung (9) zu verfestigen.

10. Montageverfahren nach Anspruch 9, wobei der Infiltrationsschritt durchgeführt wird, indem mindestens die erste Stecker-Buchsen-Verbindung (9) in ein Bad des schmelzbaren Materials in flüssigem Zustand eingetaucht wird.

11. Verfahren zur Herstellung einer Gussform (20), umfassend die folgenden Schritte:
Montieren eines Gussbaums (1) nach dem Verfahren von Anspruch 9 oder 10,
Einbetten des Gussbaums in ein feuerfestes Material, um die Form zu bilden, und
Entfernen des Gussbaums (1) aus dem Inneren der Form (20).

12. Verfahren zur Herstellung einer Gussform nach Anspruch 11, wobei der Gussbaum (1) aus einem Material besteht, das bei einer niedrigeren Temperatur als das feuerfeste Material schmelzbar ist, und aus der Form (20) in flüssigem Zustand entfernt wird.

13. Verfahren zur Herstellung einer Gussform (20) nach einem der Ansprüche 11 oder 12, wobei der Einbettungsschritt durchgeführt wird, indem der Gussbaum (1) in einen Schlicker eingetaucht wird, der Gussbaum (1) mit feuerfestem Sand besprüht wird, um eine Hülle um den Gussbaum herum zu bilden, und die Hülle gesintert wird, um sie zu verfestigen.

14. Gießverfahren, umfassend mindestens die folgenden Schritte:
Herstellen einer Gussform (20) nach dem Verfahren eines der Ansprüche 11 bis 13,
Giessen eines geschmolzenen Metallmaterials in das Innere der Form (20),
Erstarren des metallischen Materials in der Form (20) und
Entfernen der Form (20).

## Claims

1. A casting tree (1) for lost pattern casting, the tree including at least one part support (8), at least one pattern (2), and at least one first male-female connection (9) connecting said pattern (2) to the part support (8), said first male-female connection (9) comprising an orifice (13), a peg (11) at least partially inserted inside the orifice (13), and a film (15) of meltable material interposed at least between an outside surface (11a) of the peg (11) and an inside surface (13a) of the orifice (13), the tree being **characterized in that** said first male-female connection (9) presents at least two points of direct contact between an outside surface (11a) of the peg (11) and an inside surface (13a) of the orifice (13), which points are mutually offset in at least one direction that is substantially orthogonal to an insertion axis (Z1) for inserting the peg (11) into the orifice (13).

2. A casting tree (1) according to claim 1, wherein at least one of said contact points is formed by a protuberance (11b, 11c, 11d, 11e) that is radial relative to said insertion axis (Z1) on the outside surface of the peg (11) and/or on the inside surface of the orifice (13).

3. A casting tree (1) according to claim 1 or claim 2, further comprising a second male-female connection (10) connecting said pattern (2) to the part support (8) and also comprising an orifice (14) and a peg (12) at least partially inserted inside the orifice (14) with a film (15) of meltable material interposed between an outside surface (12a) of the peg (12) and an inside surface (14a) of the orifice (14), said first and second male-female connections (9, 10) presenting insertion axes (Z1, Z2) for inserting the pegs (11, 12) into the respective orifices (13, 14) that are substantially parallel and that are offset from each other in a direction (X) orthogonal to said insertion axes (Z1, Z2).

4. A casting tree (1) according to claim 3, wherein said first male-female connection (9) presents at least two direct contact points between the outside surface (11a) of the peg (11) and the inside surface (13a) of the orifice (13), which direct contact points are mutually offset in at least a first direction that is substantially orthogonal to the insertion axes (Z1, Z2) for inserting the pegs (11, 12) into the orifices (13, 14), and said second male-female connection (10) presents at least one direct contact point between the outside surface (12a) of the peg (12) and the inside surface (14a) of the orifice (14), said contact points of the second male-female connection (10) being offset relative to said contact points of the first male-female connection (9) at least in a second direction that is substantially orthogonal to the first direction and to the insertion axes (Z1, Z2) for inserting the pegs (11, 12) into the orifices (13, 14).

5. A casting tree (1) according to claim 3, wherein said first male-female connection (9) presents at least three direct contact points between the outside surface (11a) of the peg (11) and the inside surface (13a) of the orifice (13), and said second male-female connection (10) presents two direct contact points between the outside surface (12a) of the peg (12) and the inside surface (14a) of the orifice (14), said two contact points of the second male-female connection (10) being mutually offset in at least one direction (Y2) that is substantially orthogonal to a plane containing said insertion axes (Z1, Z2) .

6. A casting tree (1) according to any one of claims 1 to 5, including another connection of the pattern (2) to the part support (8) opposite from the first male-female connection (9) in the direction of an insertion axis (Z1) for inserting the peg (11) in the orifice (13) of said first male-female connection (9).

7. A casting tree (1) according to any one of claims 1 to 6, wherein said part support (8) comprises a distributor (6) for forming at least one casting channel (23) in a mold (20), said first male-female connection (9) connecting said pattern (2) to said distributor (6).

8. A casting tree (1) according to any one of claims 1 to 7, having a plurality of patterns (2) connected in a cluster to the part support (8).

9. A method of assembling a casting tree (1) for lost pattern casting, the method comprising at least the following steps:
• at least partially inserting at least one peg (11) in at least one corresponding orifice (13) so as to create at least a first male-female connection (9) between at least one pattern (2) and a part support (8), said first male-female connection (9) presenting at least two direct contact points between the outside surface (11a) of the peg (11) and the inside surface (13a) of the orifice (13), the contact points being mutually offset in at least one direction substantially orthogonal to the insertion axis (Z1) for inserting a peg (11) into the orifice (13);
• infiltrating a meltable material in the liquid state between at least one outside surface (11a) of said peg (11) and an inside surface (13a) of said orifice (13) in the first male-female connection (9); and
• solidifying the meltable material infiltrated between the outside surface of the peg and the inside surface of the orifice so as to form a film (15) of meltable material interposed at least between an outside surface (11a) of the peg (11) and an inside surface (13a) of the orifice (13) in order to consolidate the first male-female connection (9).

10. An assembly method according to claim 9, wherein the infiltration step is performed by dipping at least the first male-female connection (9) in a bath of said meltable material in the liquid state.

11. A method of producing a casting mold (20), the method comprising the following steps:
• assembling a casting tree (1) using the method of claim 9 or claim 10;
• coating said casting tree in a refractory material in order to form the mold; and
• emptying the casting tree (1) from the inside of the mold (20).

12. A method of producing a casting mold according to claim 11, wherein said casting tree (1) is made of a material that is meltable at a temperature lower than said refractory material and is emptied from the mold (20) in the liquid state.

13. A method of producing a casting mold (20) according to claim 11 or claim 12, wherein said coating step is performed by dipping said casting tree (1) in a slip, dusting the casting tree (1) with a refractory sand in order to form a shell around the casting tree, and sintering the shell in order to consolidate it.

14. A casting method comprising at least the following steps:
• producing a casting mold (20) using the method according to any one of claims 11 to 13;
• casting a molten metal material into the inside of said mold (20);
• solidifying the metal material in the mold (20); and
• detaching the mold (20).
